# EUROPÄISCHE PATENTSCHRIFT

(11) **EP 3 088 160 B1**
(45) Veröffentlichungstag und Bekanntmachung des Hinweises auf die Patenterteilung: **04.10.2017**
(21) Anmeldenummer: 16167803.2
(22) Anmeldetag: 29.04.2016
(51) Int. Cl.: B29C 49/12, B29C 49/66, B29C 49/06, B29C 49/36, B29K 67/00, B29L 31/00

(54) **VERFAHREN UND VORRICHTUNG ZUM UMFORMEN VON KUNSTSTOFFVORFORMLINGEN MIT BEHÄLTNISKÜHLUNG**
METHOD AND DEVICE FOR REFORMING PLASTIC PREFORMS INTO PLASTIC CONTAINERS
PROCEDE ET DISPOSITIF DE TRANSFORMATION D'EBAUCHES PLASTIQUES AVEC REFROIDISSEMENT DE RECIPIENT

(30) Priorität: 29.04.2015 DE 102015106615
(43) Veröffentlichungstag der Anmeldung: 02.11.2016
(73) Patentinhaber: Krones AG, 93073 Neutraubling (DE)
(72) Erfinder: Knapp, Peter, 93073 Neutraubling (DE)
(74) Vertreter: Bittner, Bernhard

(56) Entgegenhaltungen:
- DE-U1-202004 021 781
- DE-U1-202008 005 393
- US-A- 4 883 631
- US-B1- 6 485 669

## Beschreibung

Die vorliegende Erfindung bezieht sich auf ein Verfahren und eine Vorrichtung zum Umformen von Kunststoffvorformlingen zu Kunststoffbehältnissen. Aus dem Stand der Technik sind derartige Vorrichtungen und Verfahren seit langem bekannt. Dabei sind insbesondere auch Verfahren und Vorrichtungen bekannt, bei denen die Kunststoffvorformlinge bzw. die hieraus hergestellten Behältnisse mittels Kühlluft gekühlt werden. Zu diesem Zweck werden teilweise in die Kunststoffvorformlinge sogenannte Spülstangen eingeführt, welche eine Beaufschlagung insbesondere der Innenwandung der Kunststoffvorformlinge mit Kühlluft, welche durch diese Spülstange geleitet wird, erlauben. Verfahren und Vorrichtungen zum Umformen von Kunststoffvorformlingen zu Kunststoffbehältnissen sind in den Druckschriften DE20-2004-021781U1, US6845669B1 und DE20-2008-005393U1 beschrieben. Allgemein wird beim Blasprozess insbesondere einem Standardverfahren eine sogenannte Reckstange oder eine Kühlstange oder Spülstange in den Kunststoffvorformling eingeführt und der Kunststoffvorformling wird während des Streckblasens in die Länge (beispielsweise bis hin zu einem Boden einer Blasform) gezogen. In dieser Situation sind diese Spülstangen mit dem Behältnisboden verbunden bzw. kontaktieren diesen. Durch einen Kanal der Reckstange hindurch wird nunmehr die Innenwandung des Kunststoffvorformlings gekühlt, wobei die unten genauer beschriebenen Kühl- bzw. Spülstangen entsprechend hohl gebohrt sind und seitliche Öffnungen aufweisen. Genauer weisen die aus dem internen Stand der Technik der Anmelderin dieser bekannten Spülstangen schlitzförmige Öffnungen am unteren Ende der Spülstange auf. Auf diese Weise kann eine gezielte Bodenkühlung erzielt werden. Diese seitlichen Öffnungen bewirken jedoch, dass der Luftaustritt im Bereich des Bodens des Kunststoffvorformlings relativ ungleichmäßig ist und damit keine gleichmäßige Kühlung ermöglicht wird.

Der vorliegenden Erfindung liegt daher die Aufgabe zugrunde, eine gleichmäßigere Kühlung der Innenwandung des Kunststoffvorformlings bzw. des hieraus gefertigten Kunststoffbehältnisses zu ermöglichen.

Diese Aufgabe wird erfindungsgemäß durch die Gegenstände der unabhängigen Ansprüche erreicht. Vorteilhafte Ausführungsformen und Weiterbildungen sind Gegenstand der Unteransprüche.

Bei einem erfindungsgemäßen Verfahren zum Umformen von Kunststoffvorformlingen zu Kunststoffbehältnissen wird in einem ersten Verfahrensschritt ein zu expandierender Kunststoffvorformling in eine Blasform eingebracht. Anschließend wird der Kunststoffvorformling mit einem fließfähigen Medium zu seiner Expansion beaufschlagt. In einem weiteren Verfahrensschritt wird ein stangenförmiger bzw. ein stangenartiger Körper in den Kunststoffvorformling eingeführt, um diesen Kunststoffvorformling in seiner Längsrichtung zu dehnen.

In einem weiteren Verfahrensschritt wird eine Innenwandung des Kunststoffvorformlings (bzw. zu diesem Zeitpunkt des bereits geblasenen Kunststoffbehältnisses) mit einem fließfähigen Medium beaufschlagt, wobei dieses fließfähige Medium durch den stangenförmigen Körper geleitet wird (insbesondere handelt es sich bei diesem fließfähigen Medium um ein Kühlgas und insbesondere um Kühlluft).

Erfindungsgemäß wird zumindest zeitweise während der Beaufschlagung des Kunststoffbehältnisses mit dem durch den stangenförmigen Körper geleiteten fließfähigen Medium eine Stirnfläche des stangenförmigen Körpers von der Innenwandung des Kunststoffbehältnisses beabstandet.

Es wird darauf hingewiesen, dass die Verfahrensschritte des Einführens des stangenförmigen Körpers in den Kunststoffvorformling und des Beaufschlagen des Kunststoffvorformlings mit Blasluft nicht hintereinander erfolgen müssen sondern bevorzugt sogar zumindest teilweise gleichzeitig erfolgen. Insbesondere erfolgen bevorzugt auch das Dehnen bzw. Recken des Kunststoffvorformlings in seiner Längsrichtung und die Beaufschlagung mit dem gasförmigen Medium zu dessen Expansion zumindest teilweise zeitgleich. In diesem Zusammenhang wird darauf hingewiesen, dass der Begriff des Beaufschlagens sowohl das Zuführen von Blasluft in den Kunststoffvorformling bezeichnen kann als auch das Einführen von Kühlmedium.

Im Rahmen der Erfindung wird daher vorgeschlagen, dass im Gegensatz zum Stand der Technik die Luft nicht oder nicht nur durch seitliche Öffnungen austritt, sondern durch einen bewusst gebildeten Spalt zwischen dem Ende des stangenförmigen Körpers und der Innenwandung/dem Boden des Kunststoffvorformlings. In diesem Falle kann das zum Kühlen verwendete gasförmige Medium durch diesen Spalt hindurch austreten und auf diese Weise ist eine gleichmäßigere Kühlung des besonders materialreichen Bodenabschnitts möglich. Bei dem fließfähigen Medium handelt es sich insbesondere um Gas und besonders bevorzugt um Kühlgas.

Bevorzugt wird daher der stangenförmige Körper während der Beaufschlagung mit Kühlluft von der Innenwandung des Kunststoffvorformlings, insbesondere von einem Bodenbereich des Vorformlings (bzw. des in diesem Abschnitt ausgebildeten Behältnisses) beabstandet

Bevorzugt wird der stangenförmige Körper zum Recken des Kunststoffvorformlings in diesen eingeführt und trifft auf dessen Boden. Durch ein weiteres Einführung kann der Kunststoffvorformling durch den stangenförmigen Körper in seiner Längsrichtung gedehnt werden. Bevorzugt wird während dieser Dehnung der Kunststoffvorformling mit einem gasförmigen Medium zu seiner Expansion beaufschlagt. Bevorzugt findet während dieses Dehnens auch ein Vorblasen des Kunststoffvorformlings statt. Daneben kann auch ein Zwischenblasvorgang, der sich an den Vorblasvorgang anschließt, während des Dehnens des Kunststoffvorformlings erfolgen.

Bevorzugt findet nach diesem Zwischenblasvorgang ein Fertigblasen des Kunststoffbehältnisses statt, wobei bevorzugt bei dem Beginn des Fertigblasens der Reckvorgang bereits abgeschlossen ist, sich also bevorzugt die Recktstange nicht mehr weiter in das Kunststoffbehältnis hinein bewegt und/oder die Reckstange (d.h. der stangenförmige Körper) ihren Reckweg beendet hat. Bevorzugt verbleibt der stangenförmige Körper wenigstens zeitweise während des Blasvorgangs und bevorzugt während des gesamten Blasvorgangs (jedoch nicht des sich hieran anschließenden Kühlvorgangs) in Kontakt mit dem Boden des Behältnisses. Bevorzugt erfolgt die Beaufschlagung des Kunststoffvorformlings bzw. des bereits expandierten Behältnisses mit Kühlluft zeitlich nach dem Dehnen des Kunststoffvorformlings und insbesondere zeitlich nach dem Reck- und Blasvorgang.

Dabei ist es denkbar, dass bei dem erfindungsgemäßen Verfahren das fließfähige Medium erst außerhalb des stangenförmigen Körpers zumindest auch in einer radialen Richtung (radial bezogen auf einen Längsrichtung des stangenförmigen Körpers) strömt" während es bevorzugt vor dem Austritt aus dem stangenförmigen Körper im Wesentlichen nur in dessen Längsrichtung strömt.

Es wird daher in anderen Worten vorgeschlagen, dass der stangenförmige Körper zu einem definierten Zeitpunkt (gegenüber dem Behältnisboden) angehoben wird und dann in einem vorbestimmten Abstand über dem Behältnisboden liegt. Nun wird Kühlluft über den stangenförmigen, hohlgebohrten Körper in den Behälter eingeleitet und somit kann diese Luft am Kühl- oder Spülstangenende ohne seitliche Kühlöffnungen austreten.

Im Folgenden wird für den Begriff des stangenförmigen Körpers auch der Begriff Reckstange, Kühlstange oder Spülstange verwendet. Dies beruht darauf, dass dieser stangenförmige Körper eine mehrfache Funktion wahrnimmt und die Nomenklatur je nach Prozessart variiert. Einerseits dient der stangenartige Körper zum Recken der Kunststoffvorformlinge in ihrer Längsrichtung, andererseits jedoch auch zum Kühlen des Preforminneren bzw. insbesondere des Preformbodens.

Bei einem weiteren bevorzugten Verfahren wird ein vorgegebener Druck für die Kühlung des Bodens des Behältnisses bereitgestellt. Dabei wäre es möglich, dass ein erstes Druckniveau für die Durchführung eines Vorblasvorgangs bereitgestellt wird, ein zweites Druckniveau für ein Fertigblasen des Kunststoffbehältnisses und ein drittes Druckniveau für die Kühlung des Bodens. Bevorzugt ist das zweite Druckniveau höher als das erste Druckniveau. Bei einem weiteren bevorzugten Verfahren ist das dritte Druckniveau höher als das zweite Druckniveau. Besonders bevorzugt ist das dritte Druckniveau um zwischen 1 bar und 10 bar höher als das zweite Druckniveau, bevorzugt um zwischen 1 bar und 8bar, bevorzugt zwischen 1 bar und 6bar und bevorzugt zwischen 2bar und 3bar.

Bei einem weiteren bevorzugten Verfahren wird noch ein weiteres Druckniveau für ein sog. Zwischenblasen des Behältnisses zur Verfügung gestellt. Dieses Druckniveau liegt bevorzugt zwischen dem ersten Druckniveau und dem zweiten Druckniveau.

Durch das hier vorgeschlagene Anheben des Kunststoffvorformlings von der Innenwandung des Kunststoffbehältnisses wird bevorzugt ein Spalt in der Längsrichtung des Kunststoffvorformlings ausgebildet, durch welchen hindurch Kühlluft austreten kann. Besonders bevorzugt tritt das fließfähige Medium durch eine Stirnfläche des stangenförmigen Körpers aus, und beaufschlagt auf diese Weise die Innenwandung des Kunststoffvorformlings.

Bevorzugt erfolgt ein Anheben des stangenförmigen Körpers bzw. ein Beabstanden von dem Boden des Behältnisses, nach dem das Behältnis bereits vollständig durch einen Blasdruck ausgeformt wurde und besonders bevorzugt daher nach einem Fertigblasen des Behältnisses. Bevorzugt wird erst nach dem Anheben des stangenförmigen Körpers (bzw. dem Beabstanden) mit dem Kühlen des Bodens des Kunststoffbehältnisses begonnen.

Bevorzugt wird das fertig geblasene Behältnis, insbesondere auch nach der durchgeführten Bodenkühlung wieder aus der Blasform entnommen. Zu diesem Zweck wird die Blasform, insbesondere durch eine Schwenkbewegung, geöffnet.

Bei einem weiteren bevorzugten Verfahren kontaktiert der stangenförmige Körper zum dehnen des Kunststoffvorformlings eine Innenwandung des Kunststoffvorformlings. Dies bedeutet, dass der stangenförmige Körper zunächst in den Kunststoffvorformling eingeführt wird, diesen dann kontaktiert und in seiner Längsrichtung dehnt. Insbesondere kontaktiert der stangenförmige Körper den Kunststoffvorformling im Bereich eines Anspritzpunktes desselben. Vorteilhaft handelt es sich bei dem Kunststoff um PET.

Bei einem weiteren bevorzugten Verfahren erfolgt die Beaufschlagung des Kunststoffbehältnisses mit dem durch den stangenförmigen Körper geleiteten fließfähigen Medium nach dem Dehnen des Kunststoffvorformlings. Besonders bevorzugt erfolgt die Beaufschlagung des Kunststoffbehältnisses mit dem durch den stangenförmigen Körper geleiteten fließfähigen Medium, nachdem der Kunststoffvorformling bereits vollständig zu einem Kunststoffbehältnis expandiert wurde. In diesem Zeitraum ist auch eine Kühlung des materialreichen Bodenbereichs des nunmehr geblasenen Kunststoffbehältnisses von besonderer Bedeutung.

Bei einem weiteren vorteilhaften Verfahren wird der stangenförmige bzw. stangenförmige Körper zum Beaufschlagen des Kunststoffbehältnisses mit dem fließfähigen Medium in einem Abstand angeordnet, der größer ist als 0,5 mm, bevorzugt größer als 1,0 mm und bevorzugt größer als 2,0 mm. Hierbei handelt es sich insbesondere um einen in der Längsrichtung des stangenförmigen Körpers gemessenen Abstand und insbesondere um einen Abstand zwischen einem Ende des stangenförmigen bzw. stangenförmigen Körpers und der Innenwandung bzw. dem Boden des Kunststoffbehältnisses.

Bei einem weiteren vorteilhaften Verfahren wird der stangenförmige Körper zum Beaufschlagen des Kunststoffbehältnisses mit dem fließfähigen Medium in einem Abstand angeordnet, der kleiner ist als 15,0 mm, bevorzugt kleiner als 10,0 mm und besonders bevorzugt kleiner als 8,0 mm. Ein Abstand von ca. 5,0 mm zwischen dem Ende des stangenförmigen Körpers und der Innenwandung des Kunststoffbehältnisses hat sich als besonders günstig erwiesen.

Bei einem weiteren bevorzugten Verfahren wird der stangenförmige Körper für eine vorgegebene Zeitspanne gegenüber der Innenwandung des Kunststoffbehältnisses in einem vorgegebenen Abstand gehalten. Insbesondere handelt es sich hierbei um denjenigen Zeitraum, in dem auch eine Kühlung der Wandung des Kunststoffbehältnisses mit dem durch den stangenförmigen Körper strömenden Medium erfolgt.

Bei einem weiteren bevorzugten Verfahren wird während und/oder nach der Beaufschlagung der Kunststoffbehältnisse mit dem durch den stangenförmigen Körper geleiteten fließfähigen Medium der stangenförmige Körper wieder aus dem Kunststoffbehältnis herausgezogen.

Bevorzugt erfolgt damit insgesamt die Bewegung des stangenförmigen Körpers in drei Abschnitten, nämlich zunächst einem Einführen des stangenförmigen Körpers in den Kunststoffvorformling und einer damit einhergehenden Dehnung des Kunststoffvorformlings, einem Anheben des stangenförmigen Körpers um eine vorgegebene Wegstrecke, beispielsweise 5,0 mm, um den stangenförmigen Körper dann in dieser Position während eines vorgegebenen Zeitraums zu halten und schließlich dem vollständigen Zurückziehen des Kunststoffvorformlings aus dem nunmehr geblasenen Kunststoffbehältnis. Es wäre jedoch auch möglich, dass der stangenförmige Körper während des Kühlens der Innenwandung des Kunststoffbehältnisses bewegt wird, beispielsweise um gezielt auf die zu kühlende Oberfläche Einfluss zu nehmen.

Bei einem weiteren bevorzugten Verfahren erfolgt die Beaufschlagung der Kunststoffvorformlinge mit dem gasförmigen Medium mit wenigstens zwei unterschiedlichen Drücken. Bevorzugt handelt es sich hierbei um einen Vorblasschritt, in dem ein vorgegebener Druck in die Kunststoffvorformlinge eingegeben wird und einen anschließenden Fertigblasschritt, in dem die Behältnisse mit einem nunmehr höheren Druck (auch als Fertigblasdruck bezeichnet) beaufschlagt werden.

Bevorzugt wird das Behältnis unter einem höheren Druck für einen vorgegebenen Zeitraum gehalten, um dieses auszuformen bzw. um die bereits erfolgte Ausformung zu stabilisieren. Vorteilhaft erfolgt das Kühlen des Bodenbereichs des Kunststoffbehältnisses während oder nach der Beaufschlagung mit dem Fertigblasdruck. Es wäre jedoch auch möglich, dass diese Beaufschlagung während eines Entlastens des nunmehr gefertigten Kunststoffbehältnisses d.h. insbesondere während einer Druckentlastung erfolgt.

Bei einem weiteren bevorzugten Verfahren wird das expandierte Behältnis mit einer erwärmten Flüssigkeit befüllt und/oder ist zur Befüllung mit einer erwärmten Flüssigkeit geeignet. Vorteilhaft weist dabei diese erwärmte Flüssigkeit eine Temperatur von mehr als 30°C, bevorzugt von mehr als 40°C und bevorzugt von mehr als 50°C auf. Damit wird besonders bevorzugt ein Behältnis gefertigt, welches für die Befüllung mit einer erwärmten Flüssigkeit und insbesondere mit einem erwärmten Getränk geeignet ist. Derartige Behältnisse werden auch als Hotfill-Behältnisse bezeichnet.

Die vorliegende Erfindung ist weiterhin auf eine Vorrichtung zum Umformen von Kunststoffvorformlingen zu Kunststoffbehältnissen gerichtet. Diese Vorrichtung weist eine Blasform auf, innerhalb derer die Kunststoffvorformlinge zu den Kunststoffbehältnissen umformbar sind. Weiterhin weist die Vorrichtung eine Beaufschlagungseinrichtung auf, welche die Kunststoffvorformlinge zu deren Expansion mit einem fließfähigen und insbesondere gasförmigen Medium beaufschlagt sowie einen stangenförmigen Körper, der durch eine Mündung der Kunststoffvorformlinge in die Kunststoffvorformlinge einführbar ist. Dabei weist dieser stangenförmige Körper einen Kanal zum Leiten eines fließfähigen Mediums auf. Weiterhin weist die Vorrichtung eine Antriebseinrichtung auf, die den stangenförmigen Körper in die Kunststoffvorformlinge einführt und eine Steuerungseinrichtung zum Steuern dieser Antriebseinrichtung.

Erfindungsgemäß steuert die Steuerungseinrichtung die Antriebseinrichtung derart, dass der stangenförmige Körper während eines vorgegebenen Zeitraums, während dessen das fließfähige Medium durch den Kanal hindurch auf eine Innenwandung des Kunststoffbehältnisses geleitet wird, in einem vorgegebenen Abstand zu der Innenwandung des Kunststoffbehältnisses gehalten wird.

Es wird daher auch vorrichtungsseitig vorgeschlagen, dass die Bewegung der Reck- oder Kühlstange so gesteuert wird, dass diese für einen vorgegebenen Zeitraum von dem Boden des Kunststoffbehältnisses beabstandet wird und bevorzugt aber nicht zwingend in dieser Position für einen vorgegebenen Zeitraum gehalten wird, um eine Kühlung des Bodens des Behältnisses zu bewirken. Bevorzugt wird in diesem Zeitraum daher auch eine Kühlung des Bodens des Behältnisses bewirkt. Dies bedeutet, dass vorteilhaft die Steuerungseinrichtung die Zeiträume, in denen eine Kühlung des Bodens des Kunststoffbehältnisses vorgenommen wird und die Zeiträume, in denen der stangenförmige Körper von dem Boden des Kunststoffbehältnisses beabstandet wird, aufeinander abstimmt. Bevorzugt erstreckt sich der Kanal des stangenförmigen Körpers entlang einer Längsrichtung des stangenförmigen Körpers. Weiterhin ist dieser Kanal bevorzugt geradlinig ausgebildet.

Allgemein ist es möglich, dass die Antriebseinrichtung, welche den stangenförmigen Körper in die Kunststoffbehältnisse einführt, den stangenförmigen Körper bewegt, es wäre jedoch auch denkbar, dass die Antriebseinrichtung das Kunststoffbehältnis bewegt. Auch wäre eine Kombination aus beiden Bewegungen denkbar.

Vorteilhaft weist die Vorrichtung eine Blasform auf, innerhalb derer die Kunststoffvorformlinge zu den Kunststoffbehältnissen expandiert werden. Weiterhin weist die Vorrichtung bevorzugt einen Schwenkmechanismus auf, der ein Öffnen und Schließen der Blasform ermöglicht, um einen Kunststoffvorformling in die Blasform einzuführen und um ein gefertigtes Behältnis aus der Blasform zu entfernen.

Bevorzugt handelt es sich bei der Beaufschlagungseinrichtung um eine sogenannte Blasdüse, welche auf einen Mündungsrand für Kunststoffvorformlinge aufgesetzt wird, um diese mit dem gasförmigen Medium zu beaufschlagen. Vorteilhaft ist diese Beaufschlagungseinrichtung und/oder der stangenförmige Körper so ausgebildet, dass das fließfähige Medium bzw. die Blasluft zum Expandieren zwischen einem Außenumfang des stangenförmigen Körpers und der Mündung des Kunststoffvorformlings geführt werden kann.

Bevorzugt weist die Vorrichtung eine Vielzahl derartiger Blasstationen auf, die zum Umformen der Kunststoffvorformlinge zu den Kunststoffbehältnissen dienen. Diese Vielzahl an Blasstationen kann dabei an einen Träger, insbesondere einen drehbaren Träger, d.h. an einem sogenannten Blasrad, angeordnet sein.

Vorteilhaft weist der Kanal im Inneren des stangenförmigen Körpers einen kreisförmigen Querschnitt auf.

Bei einer weiteren vorteilhaften Ausführungsform weist der stangenförmige Körper in einem Endabschnitt eine durchgehende und sich in Umfangsrichtung des stangenförmigen Körpers erstreckende Wandung auf. Im Gegensatz zum Stand der Technik weist damit die Wandung dieses stangenförmigen Körpers keine seitlichen Öffnungen auf. Mit anderen Worten ist vorteilhaft ein durchgehender zylinderförmiger Rand vorgesehen und/oder der stangenförmige Körper weist eine im Wesentlichen zylinderförmige Gestalt auf.

Bei einer weiteren vorteilhaften Ausführungsform weist die Antriebseinrichtung zum Bewegen des stangenförmigen Körpers einen Elektromotor und insbesondere ein Linearmotor auf. Insbesondere durch die Verwendung eines Elektro- oder Linearmotors lässt sich eine bestimmte Position des stangenförmigen Körpers gegenüber dem Behältnis in besonders einfacher Weise einstellen und auch halten. Daneben könnte jedoch auch ein sogenannter Piezomotor als Antrieb Anwendung finden. Ein derartiger Motor hat den Vorteil, dass in einem stromlosen Zustand eine bestimmte Position gehalten werden kann.

Weitere Vorteile und Ausführungsformen ergeben sich aus den beigefügten Zeichnungen:

Darin zeigen:
- Fig. 1: eine schematische Darstellung einer erfindungsgemäßen Vorrichtung;
- Fig. 2: eine schematische Darstellung zur Veranschaulichung der Erfindung;
- Fig. 3a: eine Reck- bzw. Spülstange nach dem Stand der Technik; und
- Fig. 3b: eine erfindungsgemäße Reck- bzw. Spülstange.

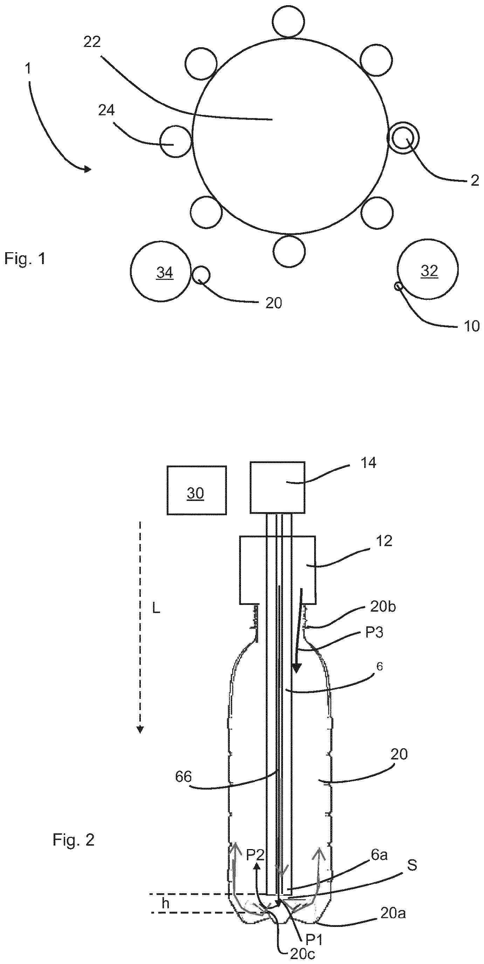

Figur 1 zeigt eine grob schematische Darstellung einer erfindungsgemäßen Vorrichtung 1. Diese Vorrichtung weist dabei eine Zuführeinrichtung, wie etwa einen Zuführstern 32 auf, der Kunststoffvorformlinge 10 (wobei nur ein Kunststoffvorformling 10 dargestellt ist) an Umformungsstationen 24 übergibt. Dabei weist die Vorrichtung einen drehbaren Träger 22 auf, an dem eine Vielzahl derartiger Umformungsstationen 24 angeordnet ist. Das Bezugszeichen 2 kennzeichnet eine Blasform, innerhalb derer die Kunststoffvorformlinge zu den Kunststoffbehältnissen expandiert werden können. Die so gefertigten Kunststoffbehältnisse bzw. Kunststoffflaschen 20 (nur ein Kunststoffbehältnis 20 ist dargestellt) können über eine Abführeinrichtung 34, wie insbesondere einen weiteren Transportstern, abgefördert werden.

Figur 2 veranschaulicht die vorliegende Erfindung. Dabei ist wiederum die Reckstange bzw. Spülstange 6 vorgesehen, welche über die Mündung 20b in das Behältnis 20 eingeführt werden kann. In Figur 2 ist dabei bereits ein vollständig ausgeformtes Behältnis gezeigt. Tatsächlich dient jedoch dieser stangenförmige Körper auch dazu, um im Vorfeld Kunststoffvorformlinge in ihrer Längsrichtung L zu dehnen. Damit wird die Reckstange in den Kunststoffvorformling (nicht gezeigt) eingeführt.

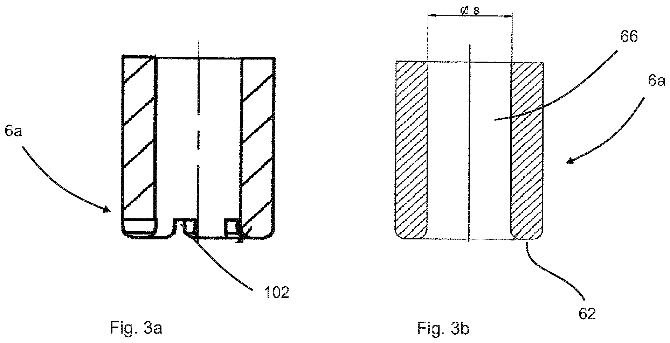

Die Reckstange weist einen Kanal 66 auf, über welchen ein Kühlmittel, insbesondere Kühlluft, in Richtung des Bodens 20a des Behältnisses strömen kann. Bei der in Figur 2 gezeigten Situation ist der stangenförmige Körper geringfügig von dem Boden 20a beabstandet. Auf diese Weise kann anders als im Stand der Technik die Kühlluft aus dem stangenförmigen Körper nach unten hin austreten und auf den Boden bzw. Bodenbereich 20a treffen. Die Pfeile P1 und P2 zeigen entsprechend den Strömungsverlauf dieser Kühlluft. Das Bezugszeichen 62 (vgl. Fig. 3b) kennzeichnet eine Stirnfläche des stangenförmigen Körpers 6, welche der Innenwandung 20c des Kunststoffbehältnisses 20 und insbesondere der Innenwandung des Bodenbereichs 20a zugewandt ist. Das Bezugszeichen h kennzeichnet einen Abstand zwischen dem stangenförmigen Körper 6 und dem Bodenbereich des Kunstsoffbehältnisses 20, genauer einen Abstand in der Längsrichtung L des Kunststoffbehältnisses 20.

Das Bezugszeichen 12 kennzeichnet eine Beaufschlagungseinrichtung, wie insbesondere eine Blasdüse, mittels derer die Kunststoffvorformlinge 10 zu ihrer Expansion mit Druckluft beaufschlagt werden können. Dabei wird die Luft zum Beaufschlagen, wie durch den Pfeil P3 angedeutet, zwischen dem stangenförmigen Körper 6 bzw. dessen Aussenumfang und der Innenwandung der Mündung 20b in das Kunststoffbehältnis 20 geführt.

Das Bezugszeichen 14 kennzeichnet eine Antriebseinrichtung, welche den stangenförmigen Körper 6 in seiner Längsrichtung bewegen kann. Hierbei handelt es sich insbesondere um einen Elektromotor.

Das Bezugszeichen 30 kennzeichnet eine Steuerungseinrichtung, welche die Bewegung des stangenförmigen Körpers 6 in das Behältnis hinein steuert. Dabei kann insbesondere auch gesteuert werden, dass der stangenförmige Körper in den in Figur 2 gezeigten Abstand h bezüglich des Bodenbereichs 20a des Kunststoffbehältnisses 20 gehalten wird, um in diesem entsprechenden Zeitraum den Bodenbereich 20a zu kühlen.

Figur 3a zeigt eine Reckstange bzw. den unteren Abschnitt 6a einer derartigen Reckstange nach dem Stand der Technik. Man erkennt, dass dieser stangenförmige Körper in Umfangsrichtung verteilte Ausnehmungen 102 aufweist. Diese sind erforderlich, damit die Kühlluft seitlich durch diese Ausnehmungen 102 austreten kann, selbst wenn der stangenförmige Körper 6 den Boden des Behältnisses 20 kontaktiert.

Figur 3b zeigt einen stangenförmigen Körper gemäß der Erfindung. Man erkennt, dass entsprechende Ausnehmungen hier nicht vorhanden sind, was auch nicht erforderlich ist, da der stangenförmige Körper während der Kühlphase von dem Boden des Behältnisses beabstandet gehalten wird.

### Bezugszeichenliste

- 1: Vorrichtung
- 2: Blasform
- 6: stangenförmiger Körper
- 10: Kunststoffvorformling
- 12: Beaufschlagungseinrichtung
- 14: Antriebseinrichtung
- 20: Kunststoffbehältnis, Kunststoffflasche
- 20a: Bodenbereich des Kunststoffbehältnisses
- 20b: Mündung des Kunststoffbehältnisses
- 20c: Innenwandung des Kunststoffbehältnisses
- 22: Träger
- 24: Umformungsstation
- 30: Steuerungseinrichtung
- 32: Zuführeinrichtung
- 34: Abführeinrichtung
- 62: Stirnfläche des stangenförmigen Körpers
- 66: Kanal des stangenförmigen Körpers
- 102: Ausnehmungen in Reckstange (Stand der Technik)
- P1, P2: Strömungsverlauf der Kühlluft
- P3: Zuführung der Blasluft zum Expandieren der Kunststoffvorformlinge
- h: Abstand zwischen stangenförmigem Körper und Innenwandung
- L: Längsrichtung des Behältnisses 10

## Patentansprüche

1. Verfahren zum Umformen von Kunststoffvorformlingen (10) zu Kunststoffbehältnissen (20) mit den Schritten:
- Einbringen eines zu expandierenden Kunststoffvorformlings (10) in eine Blasform (2)
- Beaufschlagen des Kunststoffvorformlings (10) mit einem fließfähigen Medium zu dessen Expansion
- Einführen eines stangenförmigen Körpers (6) in den Kunststoffvorformling (10) und Dehnen des Kunststoffvorformlings (10) entlang seiner Längsrichtung (L)
- Beaufschlagen einer Innenwandung (20c) des Kunststoffbehältnisses (20) mit einem fließfähigen Medium, wobei dieses fließfähige Medium durch den stangenförmigen Körper (6) geleitet wird,
**dadurch gekennzeichnet, dass**
der stangenförmige Körper (6) zum Dehnen des Kunststoffvorformlings (10) wenigstens zeitweise während des Reck- und Blasvorgangs eine Innenwandung des Kunststoffvorformlings (10) kontaktiert und während der Beaufschlagung mit Kühlluft von dieser Innenwandung des Kunststoffvorformlings, insbesondere von einem Bodenbereich des Vorformlings, beabstandet wird.

2. Verfahren nach Anspruch 1,
**dadurch gekennzeichnet, dass**
die Beaufschlagung des Kunststoffvorformlings (10) mit Kühlluft zeitlich nach dem Reck- und Blasvorgang erfolgt.

3. Verfahren nach wenigstens einem der vorangegangenen Ansprüche,
**dadurch gekennzeichnet, dass**
der stangenförmige Körper (6) zum Beaufschlagen des Kunststoffbehältnisses (20) mit Kühlluft in einem Abstand zu dem Kunststoffbehältnis (20) angeordnet wird, der größer ist als 0,5mm, bevorzugt größer als 1 mm, bevorzugt größer als 2mm.

4. Verfahren nach wenigstens einem der vorangegangenen Ansprüche,
**dadurch gekennzeichnet, dass**
der stangenförmige Körper (6) zum Beaufschlagen des Kunststoffbehältnisses (20) mit Kühlluft in einem Abstand zu dem Kunststoffbehältnis (20) angeordnet wird, der kleiner ist als 15mm, bevorzugt kleiner als 10mm, bevorzugt kleiner als 6mm.

5. Verfahren nach wenigstens einem der vorangegangenen Ansprüche,
**dadurch gekennzeichnet, dass**
der stangenförmige Körper (6) für eine vorgegebene Zeitspanne gegenüber der Innenwandung des Kunststoffbehältnisses (20c) in einem vorgegebenen Abstand (h) gehalten wird.

6. Verfahren nach wenigstens einem der vorangegangenen Ansprüche,
**dadurch gekennzeichnet, dass**
während oder nach der Beaufschlagung des Kunststoffbehältnisses (20) mit dem durch den stangenförmigen Körper (6) geleiteten fließfähigen Medium der stangenförmige Körper (6) aus dem Kunststoffbehältnis (20) herausgezogen wird.

7. Verfahren nach wenigstens einem der vorangegangenen Ansprüche,
**dadurch gekennzeichnet, dass**
die Beaufschlagung der Kunststoffvorformlinge (10) mit dem gasförmigen Medium zur Expansion der Kunststoffvorformlinge mit wenigstens zwei unterschiedlichen Drücken P1 und P2 erfolgt.

8. Verfahren nach wenigstens einem der vorangegangenen Ansprüche,
**dadurch gekennzeichnet, dass**
die Beaufschlagung der Kunststoffvorformlinge (10) mit Kühlluft unter einem Druck P3 erfolgt, der geringfügig höher ist als P2.

9. Verfahren nach wenigstens einem der vorangegangenen Ansprüche,
**dadurch gekennzeichnet, dass**
das mit dem fließfähigen Medium expandierte Kunststoffbehältnis (20) zur Befüllung mit heißer Flüssigkeit geeignet ist.

10. Vorrichtung (1) zum Umformen von Kunststoffvorformlingen (10) zu Kunststoffbehältnissen (20) mit einer Blasform (2) innerhalb derer die Kunststoffvorformlinge (10) zu den Kunststoffbehältnissen (20) umformbar sind, mit einer Beaufschlagungseinrichtung (12), welche die Kunststoffvorformlinge (10) zu deren Expansion mit einem gasförmigen Medium beaufschlagt und mit einem stangenförmigen Körper (6), der durch eine Mündung der Kunststoffvorformlinge (10) in die Kunststoffvorformlinge (10) einführbar ist, wobei dieser stangenförmige Körper (6) einen Kanal (66) zum Leiten eines fließfähigen Mediums aufweist, und mit einer Antriebseinrichtung (14), die den stangenförmigen Körper (6) in die Kunststoffvorformlinge (10) einführt und mit einer Steuerungseinrichtung (30) zum Steuern der Antriebseinrichtung (14),
**dadurch gekennzeichnet, dass**
die Steuerungseinrichtung (30) die Antriebseinrichtung (14) derart steuert, dass der stangenförmige Körper (6) während eines vorgegebenen Zeitraums, während dessen das fließfähige Medium durch den Kanal (66) hindurch auf eine Innenwandung (20c) des Kunststoffbehältnisses (20) geleitet wird, in einem vorgegebenen Abstand zu der Innenwandung (20c) des Kunststoffbehältnisses (20) gehalten wird.

11. Vorrichtung (1) nach Anspruch 10,
**dadurch gekennzeichnet, dass**
der stangenförmige Körper (6) in einem Endabschnitt (6a) eine durchgehende und sich in Umfangsrichtung erstreckende Wandung aufweist.

12. Vorrichtung (1) nach Anspruch 10,
**dadurch gekennzeichnet, dass**
die Antriebseinrichtung (14) einen Elektromotor aufweist.

## Claims

1. A method for moulding plastic preforms (10) into plastic containers (20), comprising the following steps:
- introducing a plastic preform (10) to be expanded into a blow mould (2)
- applying a flowable medium onto the plastic preform (10) for the expansion thereof
- introducing a rod-shaped body (6) into the plastic preform (10) and stretching the plastic preform (10) along the longitudinal direction (L) thereof
- applying a flowable medium onto an inner wall (20c) of the plastic container (20), wherein said flowable medium is passed through the rod-shaped body (6),
**characterised in that**
the rod-shaped body (6), for stretching the plastic preform (10) at least at times during the stretching and blowing process, contacts an inner wall of the plastic preform (10) and, during the application of cooling air thereto, is spaced apart from this inner wall of the plastic preform, in particular from a bottom region of the preform.

2. The method as claimed in claim 1,
**characterised in that**
the application of cooling air onto the plastic preform (10) is carried out temporally after the stretching and blowing process.

3. The method as claimed in at least one of the preceding claims, **characterised in that**
the rod-shaped body (6) is located, for applying cooling air onto the plastic container (20), at a distance from the plastic container (20), which is greater than 0.5 mm, preferably greater than 1 mm, preferably greater than 2 mm.

4. The method as claimed in at least one of the preceding claims, **characterised in that**
the rod-shaped body (6) is located for applying cooling air onto the plastic container (20) at a distance from the plastic container (20) that is smaller than 15 mm, preferably smaller than 10 mm, preferably smaller than 6 mm.

5. The method as claimed in at least one of the preceding claims, **characterised in that**
the rod-shaped body (6) is held at a predetermined distance (h) from the inner wall of the plastic preform (20c) for a predefined period of time.

6. The method as claimed in at least one of the preceding claims, **characterised in that**
the rod-shaped body (6) is withdrawn from the plastic container (20) during or after the application of the flowable medium passed through the rod-shaped body (6) onto the plastic container (20).

7. The method as claimed in at least one of the preceding claims, **characterised in that**
the application of the gaseous medium onto the plastic preforms (10) for the expansion of the plastic preforms is carried out at at least two different pressures P1 and P2.

8. The method as claimed in at least one of the preceding claims, **characterised in that**
the application of cooling air onto the plastic preforms (10) is carried out at a pressure P3 that is slightly higher than P2.

9. The method as claimed in at least one of the preceding claims, **characterised in that**
the plastic container (20) expanded with the flowable medium is suitable for being filled with a hot liquid.

10. A device (1) for moulding plastic preforms (10) into plastic containers (20) using a blow mould (2), within which the plastic preforms (10) can be moulded into plastic containers (20), comprising an application unit (12) that applies a gaseous medium onto the plastic preforms (10) for the expansion thereof, and comprising a rod-shaped body (6) that can be introduced into the plastic preforms (10) through a mouth of the plastic preforms (10), wherein said rod-shaped body (6) has a channel (66) for passing a flowable medium, and comprising a drive unit (14) that introduces the rod-shaped body (6) into the plastic preforms (10), and comprising a control unit (30) for controlling the drive unit (14), **characterised in that**
the control unit (30) controls the drive unit (14) in such a way that the rod-shaped body (6) is held at a predetermined distance from the inner wall (20c) of the plastic container (20) during a predefined period of time, during which the flowable medium is passed through the channel (66) onto an inner wall (20c) of the plastic container (20).

11. The device (1) as claimed in claim 10,
**characterised in that**
the rod-shaped body (6) has, in an end section (6a), a continuous wall that extends in the circumferential direction.

12. The device (1) as claimed in claim 10,
**characterised in that**
the drive unit (14) has an electric motor.

## Revendications

1. Procédé de transformation d'ébauches plastiques (10) en récipients plastiques (20) avec les étapes:
- introduction d'une ébauche plastique (10) à expanser dans un moule de soufflage (2)
- alimentation de l'ébauche plastique (10) en un moyen coulant pour son expansion
- introduction d'un corps en forme de tige (6) dans l'ébauche plastique (10) et extension de l'ébauche plastique (10) le long de son sens longitudinal (L)
- alimentation d'une paroi intérieure (20c) du récipient plastique (20) en un moyen coulant, dans lequel ce moyen coulant est conduit au travers du corps en forme de tige (6),
**caractérisé en ce que**
le corps en forme de tige (6) touche pour l'extension de l'ébauche plastique (10) au moins temporairement pendant le processus d'étirage et de soufflage une paroi intérieure de l'ébauche plastique (10) et est espacé, pendant l'alimentation en air froid, de cette paroi intérieure de l'ébauche plastique, en particulier d'une zone de fond de l'ébauche.

2. Procédé selon la revendication 1,
**caractérisé en ce que**
l'alimentation de l'ébauche plastique (10) en air froid est effectuée temporellement après le processus d'étirage et de soufflage.

3. Procédé selon au moins une des revendications précédentes, **caractérisé en ce que**
le corps en forme de tige (6) est agencé pour l'alimentation du récipient plastique (20) en air froid à une distance du récipient plastique (20), laquelle est supérieure à 0,5 mm, de préférence supérieure à 1 mm, de manière préférée entre toutes supérieure à 2 mm.

4. Procédé selon au moins une des revendications précédentes, **caractérisé en ce que**
le corps en forme de tige (6) est agencé pour l'alimentation du récipient plastique (20) en air froid à une distance du récipient plastique (20), laquelle est inférieure à 15 mm, de préférence inférieure à 10 mm, de manière préférée entre toutes inférieure à 6 mm.

5. Procédé selon au moins une des revendications précédentes, **caractérisé en ce que**
le corps en forme de tige (6) est maintenu pour un intervalle de temps prédéfini par rapport à la paroi intérieure du récipient plastique (20c) à une distance prescrite (h).

6. Procédé selon au moins une des revendications précédentes, **caractérisé en ce que**
pendant ou après l'alimentation du récipient plastique (20) en moyen coulant conduit au travers du corps en forme de tige (6), le corps en forme de tige (6) est retiré du récipient plastique (20).

7. Procédé selon au moins une des revendications précédentes, **caractérisé en ce que**
l'alimentation des ébauches plastiques (10) en moyen gazeux pour l'expansion des ébauches plastiques est effectuée avec au moins deux pressions différentes P1 et P2.

8. Procédé selon au moins une des revendications précédentes, **caractérisé en ce que**
l'alimentation des ébauches plastiques (10) en air froid est effectuée sous une pression P3 qui est légèrement plus élevée que P2.

9. Procédé selon au moins une des revendications précédentes, **caractérisé en ce que**
le récipient plastique (20) expansé avec le moyen coulant est approprié au remplissage avec du liquide chaud.

10. Dispositif (1) pour la transformation d'ébauches plastiques (10) en récipients plastiques (20) avec un moule de soufflage (2), dans lequel les ébauches plastiques (10) sont transformables en récipients plastiques (20), avec un dispositif d'alimentation (12) qui alimente les ébauches plastiques (10) pour leur expansion en un moyen gazeux et avec un corps en forme de tige (6) qui peut être introduit par une embouchure des ébauches plastiques (10) dans les ébauches plastiques (10), dans lequel ce corps en forme de tige (6) présente un canal (66) pour la conduite d'un moyen coulant, et avec un dispositif d'entraînement (14) qui introduit le corps en forme de tige (6) dans les ébauches plastiques (10) et avec un dispositif de commande (30) pour la commande du dispositif d'entraînement (14),
**caractérisé en ce que**
le dispositif de commande (30) commande le dispositif d'entraînement (14) de telle manière que le corps en forme de tige (6) soit maintenu pendant une période prescrite, pendant laquelle le milieu coulant est conduit au travers du canal (66) sur une paroi intérieure (20c) du récipient plastique (20), à une distance prescrite de la paroi intérieure (20c) du récipient plastique (20).

11. Dispositif (1) selon la revendication 10,
**caractérisé en ce que**
le corps en forme de tige (6) présente, dans une section d'extrémité (6a), une paroi continue et s'étendant dans le sens périphérique.

12. Dispositif (1) selon la revendication 10,
**caractérisé en ce que**
le dispositif d'entraînement (14) présente un moteur électrique.
